# EUROPÄISCHE PATENTSCHRIFT

(11) **EP 0 545 006 B1**
(45) Veröffentlichungstag und Bekanntmachung des Hinweises auf die Patenterteilung: **05.07.1995**
(21) Anmeldenummer: 92115464.7
(22) Anmeldetag: 10.09.1992
(51) Int. Cl.: B23B 29/32, B23Q 16/10

(54) **Werkzeugrevolver**
Tool turret
Porte-outil revolver

(30) Priorität: 30.11.1991 DE 4139543
(43) Veröffentlichungstag der Anmeldung: 09.06.1993
(73) Patentinhaber: Sauter Feinmechanik GmbH, D-72555 Metzingen (DE)
(72) Erfinder: Schips, Günther, W-7430 Metzingen (DE)
(74) Vertreter: Patentanwälte Bartels und Partner

(56) Entgegenhaltungen:
- EP-A- 0 343 347
- DE-A- 3 814 595
- DE-C- 3 730 561

## Beschreibung

Die Erfindung betrifft einen Werkzeugrevolver, der die Merkmale des Oberbegriffs des Anspruches 1 aufweist.

Bei derartigen Werkzeugrevolvern (DE 38 14 595 A1) besteht die Gefahr, daß die Positionsgenauigkeit des Revolverkopfes vermindert wird, wenn der Werkzeugrevolver auf einer Gegenspindel-Drehmaschine eingesetzt wird und bei einer Bearbeitung eines von der Gegenspindel gehaltenen Werkstückes auf den Revolverkopf eine Schnittkraft-Belastung ausgeübt wird, die im Sinne eines Abhebens des Revolverkopfes vom Gehäuse wirkt und größer ist als die Differenz zwischen der Kraft, die von dem das Verriegelungsglied bildenden oder betätigenden Kolben über den Zahnkranz des Revolverkopfes auf diesen ausgeübt wird, und der in entgegengesetzter Richtung zu dieser Kraft auf den Revolverkopf wirkenden Reaktionskraft. Wenn in diesem Falle das die Axialkräfte des Revolverkopfes aufnehmende Lager ein gewisses Spiel hat, kann es zu einer Veränderung der Position des Revolverkopfes kommen, was zu entsprechenden Ungenauigkeiten bei der Bearbeitung der Werkstücke führt.

Die Erzeugung hydraulischer Kräfte mittels Kolben ist bei Werkzeugrevolvern auch zum Zwecke der Axialverschiebung von Wellen bekannt (DE 40 18 543 C1), die Zahnräder tragen, welche in Eingriff und außer Eingriff mit anderen Zahnrädern gebracht werden müssen.

Der Erfindung liegt die Aufgabe zugrunde, in möglichst einfacher Weise einen Einfluß der Schnittkraft-Belastung des Revolverkopfes bei einer sogenannten Rückseitenbearbeitung auszuschließen. Diese Aufgabe löst ein Werkzeugrevolver mit den Merkmalen des Anspruches 1.

Die mittels des Kolbens erzeugbare Kraft braucht nur so groß gewählt zu werden, daß die entgegen der Schnittkraft-Belastung wirksamen Kräfte stets größer sind als die in Richtung der Schnittkraft-Belastung wirkenden Kräfte. Zwar könnte man einer Verschlechterung der Positionsgenauigkeit des Revolverkopfes auch dadurch begegnen, daß man jegliches Spiel im Bereich des Axiallagers ausschließt. Der Aufwand für die hierzu erforderliche Bearbeitungsgenauigkeit ist jedoch wesentlich größer als der Aufwand für den Kolben, zumal wegen der hydraulischen Betätigung des Verriegelungsgliedes das Hydraulikmittel zur Betätigung des Kolbens im Gehäuse zur Verfügung steht. Der Kolben erlaubt eine verhältnismäßig großes Spiel im Bereich des Axiallagers, da dieses Spiel vom Kolben vollständig ausgeschaltet werden kann.

Vorteilhafte Weiterbildungen beschreiben die Unteransprüche 2 bis 7.

Bei einer bevorzugten Ausführungsform hat der Revolverkopf einen sich in axialer Richtung des Gehäuses erstreckenden Fortsatz mit einer Schulter, die einen vom Fortsatz durchdrungenen Teil des Gehäuses hintergreift. Der Kolben kann dann ringförmig den Fortsatz umfassen und sich einerseits, vorzugsweise über ein Lager, an der Schulter und andererseits über das Hydraulikmittel an der ihm zugekehrten Stirnfläche des Gehäuses abstützen. Der Aufwand ist hierbei besonders gering.

Vorzugsweise hat der ringförmige Kolben einen zu ihm konzentrischen, sich an seine innere Randzone anschließenden, rohrförmigen Ansatz. Zum einen kann sich der Kolben über diesen Ansatz und ein Lager am Fortsatz des Revolverkopfes abstützen. Zum anderen können die erforderlichen Abdichtungen im Bereich der Außenmantelflächen des Kolbens und des Ansatzes vorgesehen werden. Es genügen dann einfache Ringdichtungen.

Vorteilhafterweise ist die Hydraulikmittelleitung, die der Zufuhr des Hydraulikmittels zu dem Kolben dient, durch das Gehäuse hindurch zu einem Arbeitsraum geführt, den das Verriegelungsglied teilweise begrenzt. Der Anschluß des Kolbens an die Hydraulikmittelversorgung erfordert dann nur wenige Bohrungen.

Im folgenden ist die Erfindung anhand eines in der Zeichnung dargestellten Ausführungsbeispiels im einzelnen erläutert.
- Fig. 1: zeigt eine schematische Ansicht des Ausführungsbeispiels,
- Fig. 2: zeigt einen unvollständig dargestellten Längsschnitt des Ausführungsbeispiels.

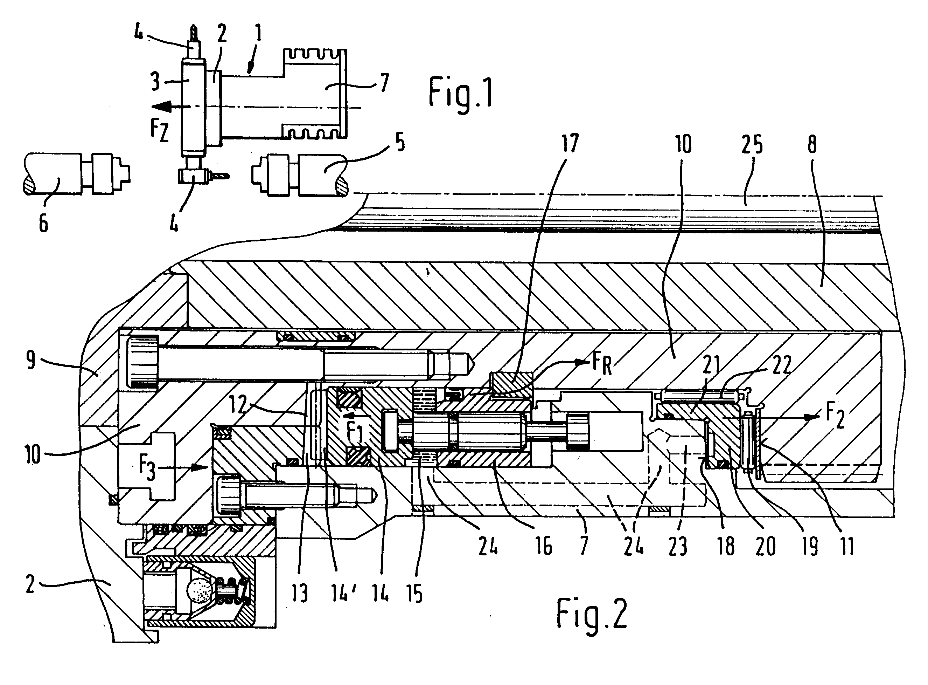

Ein als Ganzes mit 1 bezeichneter Werkzeugrevolver, der bei einer Gegenspindel-Drehmaschine auch für eine sogenannte Rückseitenbearbeitung geeignet ist, weist einen Revolverkopf 2 auf, an dem in bekannter Weise eine Werkzeugscheibe 3 lösbar befestigt ist, die wenigstens ein Werkzeugmodul 4 trägt, mit dem eine Rückseitenbearbeitung eines von der Gegenspindel 5 der Werkzeugmaschine getragenen Werkstückes vorgenommen werden kann. Die bei der Rückseitenbearbeitung auftretende Schnittkraft-Belastung ist in Fig. 1 durch den Pfeil F_{z} angedeutet. Sie ist der Schnittkraft-Belastung entgegengesetzt, die bei einer Bearbeitung des von der Spindel 6 getragenen Werkstückes auftritt. Der Werkzeugrevolver 1 weist ein auf einem Schlitten der Gegenspindel-Drehmaschine festzuspannendes Gehäuse 7 auf, in dem sich eine zur Drehachse des Revolverkopfes 2 konzentrische, hohlzylindrische Säule 8 befindet, die im Bereich Ihres vom Revolverkopf 2 wegweisenden Endes fest mit dem Gehäuse 7 verbunden ist. An ihrem anderen Ende trägt die Säule 8 einen im Durchmesser größeren zylindrischen Kopf 9, der in eine korrespondierende, zentrale Ausnehmung des Revolverkopfes 2 eingreift.

An die dem Gehäuse 7 zugekehrte Seite des Revolverkopfes 2 schließt sich ein mit dem Revolverkopf 2 fest verbundener, hohlzylindrischer Fortsatz 10 an, der in den Ringraum zwischen der Säule 8 und dem Gehäuse 7 eingreift und an seinem freien Ende unter Bildung einer Schulter 11 einen radial nach außen sich erstreckenden Ringflansch aufweist, der eine Außenverzahnung trägt, mit der ein Ritzel eines nicht dargestellten Getriebes kämmt.

Der Fortsatz 10 ist im Bereich zwischen der Schulter 11 und dem Revolverkopf 2 mit einem aus radial verlaufenden Zähnen bestehenden Zahnkranz 12 versehen. Dieser Zahnkranz 12 liegt innerhalb eines Zahnkranzes 13 des Gehäuses 7 auf dessen radiale Zähne die gleichartigen Zähne des Zahnkranzes 12 ausgerichtet werden können.

Zum Zwecke der Verriegelung des Revolverkopfes 2 in einer seiner wählbaren Drehstellungen und zum Zwecke einer genauen Positionierung ist ein ringförmiges Verriegelungsglied 14 vorgesehen, das einen Kolben bildet und in einem Ringraum angeordnet ist, der innen vom Fortsatz 10 und außen vom Gehäuse 7 begrenzt ist. Dieses Verriegelungsglied 14 ist an seiner dem Revolverkopf 2 zugekehrten Stirnseite mit einer radialen Verzahnung 14' versehen. Diese radiale Verzahnung 14' kann in spielfreien Eingriff mit den beiden Zahnkränzen 12 und 13 dadurch gebracht und gehalten werden, daß man das Verriegelungsglied 14 auf der der radialen Verzahnung 14' abgekehrten Seite mit einem unter Druck stehenden Hydraulikmittel beaufschlagt.

Der das Hydraulikmittel aufnehmende Arbeitsraum 15 ist andererseits von einem Ringkörper 16 begrenzt, der ebenso wie das Verriegelungsglied 14 im Bereich seiner inneren und äußeren Mantelfläche gegenüber dem Fortsatz 10 bzw. dem Gehäuse 7 abgedichtet ist. Ein Verbindungsring 17, der in eine Ringnut in der Außenmantelfläche des Fortsatzes 10 eingreift und auf dem sich eine Schulter des Ringkörpers 16 abstützt, nimmt die vom Druckmittel auf den Ringkörper 16 ausgeübte Reaktionskraft F_{R}, die so groß ist wie Kraft F₁, auf und leitet sie in den Fortsatz 10 ein.

Der sich radial nach außen erstreckende Ringflansch des Fortsatzes 10 hintergreift im Abstand eine Materialpartie des Gehäuses 7, die eine zur Schulter 11 parallele Ringfläche 18 und zwei innen und außen an diese anschließende Zylinderflächen bildet. Die Ringfläche 18 liegt der Schulter 11 gegenüber, an der ein Axialrollenlager 19 abgestützt ist. Ein zusätzlich zu dem durch das Verriegelungsglied 14 gebildeten Kolben vorhandener Ringkolben 20 liegt mit seiner einen Stirnfläche an diesem Axialrollenlager 19 an. Seine andere Stirnfläche ist der Ringfläche 18 zugewandt. An die innere Randzone des Ringkolbens 20 ist ein rohrförmiger Ansatz 21 angeformt, dessen zylindrische Innenfläche an einem Radiallager 22 anliegt, das andererseits an der Außenmantelfläche des Fortsatzes 10 anliegt. Die Außenmantelfläche sowohl des Ringkolbens 20 als auch des rohrförmigen Ansatzes 21 sind mittels je einer Ringdichtung gegenüber den ihnen zugekehrten Zylinderflächen des Gehäuses 7 abgedichtet. Daher kann Druckmittel, das den Ringkolben 20 auf der der Ringfläche 18 zugekehrten Stirnfläche beaufschlagt, nicht austreten.

Eine in der Ringfläche 18 mündende Bohrung 23 ist über weitere Bohrungen 24 des Gehäuses 7 mit dem Arbeitsraum 15 verbunden. Daher wird auf den Ringkolben 20 eine Kraft F₂ ausgeübt, sobald auf das Verriegelungsglied 14 eine in der entgegengesetzten Richtung wirkende Kraft F₁ ausgeübt wird. Die wirksamen Flächen des Verriegelungsgliedes 14 und des Ringkolbens 20 sind so gewählt, daß die Kraft F₂ mehr als 50% der Kraft F₁ beträgt. Da die Hälfte der Kraft F₁ auf den Fortsatz 10 und damit den mit ihm verbundenen Revolverkopf 2 im Sinne einer Belastung des Revolverkopfes 2 gegen das Gehäuse 7 hin wirkt, ist die Gesamtkraft F₃, welche in diesem Sinne und damit entgegen der durch die Schnittkraftbelastung hervorgerufenen Kraft F_{z} wirkt, gleich der Summe der Kräfte 1/2 F₁ + F₂. Diese Summe kann problemlos so groß gemacht werden, daß die aus der Schnittkraft-Belastung herrührende Kraft F_{z} bei allen auftretenden Bedingungen überkompensiert ist. Der Revolverkopf 2 wird deshalb im verriegelten Zustand zuverlässig an das Gehäuse 7 angepreßt und spielfrei in dieser Position gehalten.

Befindet sich das Verriegelungsglied 14 in seiner Freigabestellung, was voraussetzt, daß der Arbeitsraum 15 druckentlastet ist, dann ist auch der Ringkolben 20 druckentlastet, so daß die Kraft F₃ gleich Null ist und eine Drehbewegung des Revolverkopfes 2 durch einen Drehantrieb über die Verzahnung des radial sich nach außen erstreckenden Flansches des Fortsatzes 10 nicht behindert wird.

Der Drehantrieb der Werkzeuge erfolgt über eine durch die Säule 8 hindurchgeführte, zentrale Antriebswelle 25, ein im Kopf 9 angeordnetes Winkelgetriebe und eine im Kopf 9 radial verlaufende sowie in dieser Richtung verschiebbare Kupplungswelle.

## Patentansprüche

1. Werkzeugrevolver mit einem von einem Gehäuse (7) getragenen und relativ zu diesem Gehäuse (7) drehbaren Revolverkopf (2), welcher auf der dem Gehäuseinneren zugekehrten Seite einen zu seiner Drehachse konzentrischen Zahnkranz (12) mit radial verlaufenden Zähnen aufweist, die in wählbaren Drehstellungen des Revolverkopfes (2) mit den Zähnen eines Zahnkranzes (13) des Gehäuses (7) fluchten, und mit einem in Richtung der Drehachse des Revolverkopfes (2) mittels eines Kolbens hydraulisch verschiebbaren Verriegelungsglied (14) mit einem Zahnkranz (14'), dessen radiale Zähne in der Verriegelungsstellung mit der hydraulisch erzeugten Kraft sowohl in den Zahnkranz (12) des Revolverkopfes (2) als auch in den Zahnkranz (13) des Gehäuses (7) eingreifen, wobei der hydraulische Druck gleichzeitig den Revolverkopf (2) mit einer axialen Reaktionskraft (F_{R}) belastet, die der vom Verriegelungsglied (14) auf den Zahnkranz (12) des Revolverkopfes (2) ausgeübten axialen Kraft entgegengesetzt ist, gekennzeichnet durch einen hydraulisch relativ zum Gehäuse (7) verschiebbaren zusätzlichen Kolben (20), der auf den Revolverkopf (2) in dessen verriegeltem Zustand eine in der gleichen Richtung wie die Reaktionskraft (F_{R}) wirkende Kraft (F₂) ausübt.

2. Werkzeugrevolver nach Anspruch 1, gekennzeichnet durch einen sich vom Revolverkopf (2) in axialer Richtung in das Gehäuse (7) hinein erstreckenden Fortsatz (10) mit einer Schulter (11), die einen vom Fortsatz (10) durchdrungenen Teil des Gehäuses (7) hintergreift, und einer Anordnung des ringförmigen, den Fortsatz (10) umfassenden zusätzlichen Kolbens (20) zwischen der Schulter (11) und der dieser zugekehrten Stirnfläche (18) des vom Fortsatz (10) durchdrungenen Teils des Gehäuses (7).

3. Werkzeugrevolver nach Anspruch 2, dadurch gekennzeichnet, daß der zusätzliche Kolben (20) über ein Lager (22) in radialer Richtung auf dem Fortsatz (10) abgestützt ist und daß der dem zusätzlichen Kolben (20) zugeordnete Arbeitsraum zwischen dem zusätzlichen Kolben (20) und der diesem zugekehrten Stirnfläche des vom Fortsatz (10) durchdrungenen Teils des Gehäuses (7) vorgesehen ist.

4. Werkzeugrevolver nach Anspruch 3, dadurch gekennzeichnet, daß der ringförmige, zusätzliche Kolben (20) einen zu ihm konzentrischen, sich an seine innere Randzone anschließenden, rohrförmigen Ansatz (21) aufweist, zwischen dessen Außenmantelfläche ebenso wie zwischen derjenigen des zusätzlichen Kolbens (20) einerseits und korrespondierenden Zylinderflächen des Gehäuses (7) andererseits wenigstens je eine Ringdichtung angeordnet ist.

5. Werkzeugrevolver nach einem der Ansprüche 1 bis 4, dadurch gekennzeichnet, daß wenigstens eine Hydraulikmittelleitung (23) in der dem zusätzlichen Kolben (20) zugekehrten Stirnfläche (18) des Gehäuses (7) mündet.

6. Werkzeugrevolver nach Anspruch 5, dadurch gekennzeichnet, daß die Hydraulikmittelleitung (23,24) durch das Gehäuse (7) hindurch zu einem Arbeitsraum (15) geführt ist, den das Verriegelungsglied (14) teilweise begrenzt.

7. Werkzeugrevolver nach Anspruch 6, dadurch gekennzeichnet, daß der Arbeitsraum (15) auf der dem Verriegelungsglied (14) gegenüberliegenden Stirnseite von einem den Fortsatz (10) des Revolverkopfes (2) umfassenden Ringkörper (16) teilweise begrenzt wird, welcher in der vom Verriegelungsglied (14) wegweisenden Richtung formschlüssig mit dem Fortsatz (10) verbunden ist.

## Claims

1. Tool turret with a turret head (2) supported by a housing (7) and able to rotate relative to this housing (7), which turret head (2), on the side facing the interior of the housing, comprises a gear ring (12) concentric with its axis of rotation, with radially extending teeth, which in selectable rotary positions of the turret head (2) align with the teeth of a gear ring (13) of the housing (7), and with a locking member (14) displaceable hydraulically by means of a piston in the direction of the axis of rotation of the turret head (2), with a gear ring (14'), whereof the radial teeth, in the locking position, engage by the hydraulically produced force both in the gear ring (12) of the turret head (2) as well as in the gear ring (13) of the housing (7), the hydraulic pressure simultaneously loading the turret head (2) with an axial reaction force (F_{R}), which opposes the axial force exerted by the locking member (14) on the gear ring (12) of the turret head (2), characterised by an additional piston (20) displaceable hydraulically relative to the housing (7), which piston exerts, on the turret head (2), in its locked state, a force (F₂) acting in the same direction as the reaction force (F_{R}).

2. Tool turret according to Claim 1, characterised by a projection (10) extending from the turret head (2) in the axial direction into the housing (7), with a shoulder (11), which engages behind a part of the housing (7) penetrated by the projection (10), and an arrangement of the annular, additional piston (20) surrounding the projection (10), between the shoulder (11) and the end face (18) facing the latter, of the part of the housing (7) penetrated by the projection (10).

3. Tool turret according to Claim 2, characterised in that the additional piston (20) is supported by way of a bearing (22) in the radial direction on the projection (10) and that the working chamber associated with the additional piston (20) is provided between the additional piston (20) and the end face, facing the latter, of the part of the housing (7) penetrated by the projection (10).

4. Tool turret according to Claim 3, characterised in that the annular, additional piston (20) comprises a tubular extension (21) concentric therewith and adjoining it on its inner boundary zone, between the outer surface of which and likewise between that of the additional piston (20) on the one side and corresponding cylindrical surfaces of the housing (7) on the other side, at least one annular gasket is respectively located.

5. Tool turret according to one of Claims 1 to 4, characterised in that at least one hydraulic medium line (23) opens in the end face (18) of the housing (7) facing the additional piston (20).

6. Tool turret according to Claim 5, characterised in that the hydraulic medium line (23, 24) is guided through the housing (7) to a working chamber (15), which partly defines the locking member (14).

7. Tool turret according to Claim 6, characterised in that at the front end opposite the locking member (14), the working chamber (15) is partly defined by an annular body (16) surrounding the projection (10) of the turret head (2), which body (16) is connected in a form-locking manner to the projection (10) in the direction pointing away from the locking member (14).

## Revendications

1. Porte-outils revolver comportant, supportée par un bâti (7) et rotative par rapport à celui-ci, une tourelle revolver (2) laquelle présente sur le côté orienté vers l'intérieur du bâti une couronne dentée (12) concentrique à son axe de rotation et munie de dents s'étendant radialement, lesquelles sont en alignement, dans des positions de rotation pouvant être sélectionnées de la tourelle (2), avec les dents d'une couronne dentée (13) du bâti (7), et comportant un élément de blocage (14) pouvant coulisser hydrauliquement au moyen d'un piston, en direction de l'axe de rotation de la tourelle (2), comportant une couronne dentée (14') dont les dents radiales s'engrènent, en position de blocage, sous la force générée hydrauliquement, d'une part dans la couronne dentée (12) de la tourelle (2) et, d'autre part, dans la couronne dentée (13) du bâti (7), ladite force hydraulique exerçant en même temps sur la tourelle (2) une force de réaction axiale (F_{R}) qui est opposée à la force axiale exercée par l'élément de blocage (14) sur la couronne dentée (12) de ladite tourelle (2), caractérisé par la présence d'un piston complémentaire (20) mobile hydrauliquement par rapport au bâti (7), ledit piston (20) exerçant sur la tourelle (2), dans sa position bloquée, une force (F₂) agissant dans la même direction que la force de réaction (F_{R}).

2. Porte-outils revolver selon la revendication 1, caractérisé par la présence d'un prolongement (10) s'étendant de la tourelle (2) en direction axiale dans le bâti (7) et muni d'un épaulement (11) qui agrippe une partie du bâti (7) traversée par le prolongement (10) et par la disposition du piston complémentaire (20) de forme annulaire et entourant le prolongement (10), entre l'épaulement (11) et la face frontale (18) opposée à celui-ci de la partie du bâti (7), traversée par le prolongement (10).

3. Porte-outils revolver selon la revendication 2, caractérisé en ce que le piston complémentaire (20) s'appuie à travers un palier (22) en direction axiale sur le prolongement (10), et en ce que l'espace réservé au travail du piston complémentaire (20) est prévu entre ce piston complémentaire (20) et la face frontale orientée vers celui-ci de la partie du bâti (7) traversée par le prolongement (10).

4. Porte-outils revolver selon la revendication 3, caractérisé en ce que le piston complémentaire (20) de forme annulaire présente, concentriquement à lui et lui faisant suite dans sa zone d'extrémité intérieure, un embout de forme tubulaire (21) entre la face enveloppante extérieure duquel, ainsi qu'entre celle du piston complémentaire (20), d'une part, et des faces cylindriques correspondantes du bâti (7), d'autre part, est disposé respectivement au moins un joint de forme annulaire.

5. Porte-outils revolver selon l'une des revendications 1 à 4, caractérisé en ce qu'au moins une conduite d'un fluide hydraulique (23) débouche dans la face frontale (18) du bâti (7), orientée vers le piston complémentaire (20).

6. Porte-outils revolver selon la revendication 5, caractérisé en ce que la conduite (23, 24) de fluide hydraulique passe à travers le bâti (7) en direction d'un espace de travail (15) qui délimite partiellement l'élément de blocage (14).

7. Porte-outils revolver selon la revendication 6, caractérisé en ce que l'espace de travail (15) est délimité partiellement sur la face frontale faisant face à l'élément de blocage (14), par un corps annulaire (16) entourant le prolongement (10) de la tourelle (2), ledit corps annulaire (16) étant engagé géométriquement sur le prolongement (10) dans la direction opposée à celle de l'élément de blocage (14).
